# EUROPÄISCHE PATENTANMELDUNG

(11) **EP 1 533 521 A1**
(43) Veröffentlichungstag der Anmeldung: **25.05.2005**
(21) Anmeldenummer: 03026769.4
(22) Anmeldetag: 21.11.2003
(51) Int. Cl.: F03D 11/00

(54) **Windkraftanlage mit verminderter Schallabstrahlung**

(71) Anmelder: GENERAL ELECTRIC COMPANY, Schenectady, NY 12345 (US)
(72) Erfinder: Kavafyan, Philippe, 48431 Rheine (DE); Stubler, Jerome, 75016 Paris (FR)
(74) Vertreter: Zimmermann & Partner

(57) **Zusammenfassung**

Zur Verminderung der Schallabstrahlung einer Windkraftanlage mit einem Turm, der eine Turmwand (4) mit Innen- und Außenseite aufweist, wird eine Versteifungsschicht (16), die zumindest aus einer Schicht (20, 24) eines kohlenstofffaserverstärkten Kunststoffs besteht, auf die Innenseite (2) und/oder Außenseite aufgebracht. Zusätzlich kann eine Dämpfungsschicht (22) zwischen der Versteifungsschicht (16) und der Turmwand (4) vorgesehen werden. Die Versteifungsschicht (16) kann aus zwei oder mehreren kohlenstofffaserverstärkten Kunststoffschichten (20, 24, 26) und einem Abstandselement (28) bestehen, das zwischen den Kunststoffschichten (20, 24, 26) angeordnet ist und zur weiteren Verstärkung beiträgt.

## Beschreibung

Die Erfindung liegt auf dem Gebiet der Windenergie und betrifft eine Windkraftanlage mit einem Turm, insbesondere die Schallisolierung von Windkraftanlagen, sowie ein Verfahren zur Herstellung einer Windkraftanlage.

Windkraftanlagen werden zur Bereitstellung von Elektroenergie in zunehmendem Maße eingesetzt. Prinzipiell bestehen Windkraftanlagen aus einem Turm, einem auf dem Turm gelagerten Maschinenhaus und einem Rotor, der mittels einer Welle im Maschinenhaus drehbar gelagert ist. Der Rotor ist bei modernen Windkraftanlagen typischerweise mit drei Rotorblättern bestückt. Die mit einem aerodynamischen Profil versehenen Rotorblätter erfahren beim Anströmen durch den Wind einen Auftrieb und bringen dadurch den Rotor in eine Drehbewegung. Die Welle des Rotors überträgt diese Drehbewegung zu einem im Maschinenhaus untergebrachten Generator zur Energieerzeugung. Die Übertragung der Drehbewegung kann durch ein Getriebe vermittelt werden, um die zum Generator abgegebene Drehzahl zu erhöhen.

Beim Betrieb einer Windkraftanlage entstehen Geräusche, die als störend empfunden werden können. Für technische Anlagen bestehen gesetzliche Regelungen über die zulässige Intensität der mittleren Schallabstrahlung. Die gesetzlichen Regelungen in Deutschland, die auf der DIN-Norm 2058 basieren, gestatten maximale Werte von beispielsweise 65 dB(A) in Industriegebieten am Tag, jedoch nur von 35 dB(A) in reinen Wohngebieten während der Nacht. Diese Werte müssen auch von Windkraftanlagen eingehalten werden.

Zu den von einer Windkraftanlage verursachten Geräuschen zählen einerseits die Windgeräusche (air-born noise), die durch den an den Rotorblättern und dem Turm vorbeistreichenden Wind entstehen, und andererseits die durch sich bewegende mechanische Komponenten erzeugten Geräusche (structural-born noise). Letztere entstehen insbesondere im Maschinenhaus durch den Generator und das Getriebe aber auch durch Hilfsgeräte wie Kühlventilatoren, Pumpen sowie durch Lager und den Azimuth-Antrieb zum Drehen des Maschinenhauses. Mechanisch erzeugte Geräusche können bestimmte Frequenzspitzen aufweisen, die z.B. durch die Frequenz der ineinandergreifenden Zähne (meshing frequency) des Getriebes verursacht werden. Die Geräusche werden als Körperschall durch die vorhandenen Strukturen übertragen und an großen Flächen in die Umgebung abgestrahlt. Der Turm mit seiner vergleichsweisen großen Außenfläche bildet eine besonders gute Abstrahlfläche. Außerdem stellt der Turm einen Resonator dar, der Frequenzen im Bereich von 1 bis etwa 500 Hz verstärkt.

Zur Minimierung der Schallabstrahlung wurde eine Reihe von Vorschlägen unterbreitet. So wird beispielsweise in der US 6,224,341 B1 (Edge Innovations & Technology) der Versuch unternommen, die Geräuscherzeugung von sich bewegenden hohlen Komponenten durch Auffüllen dieser mit einem granularem Material geringer Dichte zu verringern. Dadurch soll eine interne Dämpfung erreicht werden. Diese Lösung erfordert jedoch ein Redesign bestehender Anlagen. Einen anderen Weg beschreitet die DE 199 30 751 A1 (Franz Mitsch). Dort sollen weiche Lager für das Getriebe und den Generator diese Schallquellen von den übrigen Komponenten und insbesondere vom Turm entkoppeln, um so den Transmissionsweg des Körperschalls zu unterbrechen. Aus der US 6,213,721 B1 (Thomson Marconi Sonar Limited) ist schließlich bekannt, Metallplatten mittels einer dämpfenden Kunststoffschicht auf die Turmwand aufzukleben. Die Größe der Kunststoffschicht und die Masse der Metallplatten sollen dabei so abgestimmt sein, daß sie die Abstrahlung bestimmter Frequenzen vermindern.

Die mit diesen Vorschlägen erzielte Geräuschverringerung genügt jedoch häufig nicht den gesetzlichen Anforderungen oder ist aus wirtschaftlichen Gründen nicht vertretbar.

Es besteht daher der Wunsch nach einer verbesserten Verminderung der Schallabstrahlung einer Windkraftanlage, die gleichzeitig praktikabel und einfach sein soll.

Diese Aufgabe wird gelöst durch eine Windkraftanlage
- mit einem Turm, der eine Turmwand mit Innen- und Außenseite aufweist, und
- einer Versteifungsschicht, die auf der Innenseite und/oder Außenseite aufgebracht ist und aus zumindest einer Schicht eines faserverstärkten Kunststoffs besteht.

Faserverstärkte Kunststoffe weisen eine hohe Steifigkeit und Festigkeit bei gleichzeitig geringem Eigengewicht auf. Solchen Kunststoffe gestatten die Bildung von hoch effizienten Versteifungsschichten, welche die Schwingungseigenschaften der Turmwand verändern und so zu einer Schalldämpfung führen. Die Schalldämpfung beruht im wesentlichen darauf, daß die Energie der auftretenden Schwingungen zur Verformung der Versteifungsschicht aufgebraucht und in Verformungsenergie umgewandelt wird und damit nicht mehr als Schall von der Turmwand abgestrahlt werden kann. Die hohe Effizienz der Schalldämmung wird durch die unterschiedlichen mechanischen Eigenschaften des faserverstärkten Kunststoffs und dem Material der Turmwand, das typischerweise Stahl oder Beton ist, erreicht. Insbesondere im relevanten Frequenzbereich verbessert sich die Dämpfung deutlich.

Bei den faserverstärkten Kunststoffen kann es sich erfindungsgemäß um kohlenstoff-, glas- und/oder aramidfaserverstärkte Kunststoffe handeln, wobei insbesondere kohlenstofffaserverstärkte Kunststoffe zum Einsatz gelangen.

Windkraftanlagen werden typischerweise so konstruiert werden, daß die bei Volllast auftretenden Biegeschwingungen des Turmes entweder unterhalb der ersten, zwischen erster und zweiter oder oberhalb der zweiten Biegeeigenfrequenz des Turmes liegen. Zusatzlasten können zu einer Verschiebung der Biegeeigenfrequenzen und damit zu einer Instabilität der Windkraftanlage führen. Daher ist bei bestehendem Turmdesign das Gesamtgewicht aller Zusatzlasten, z.B. für spätere Einbauten oder Änderungen, auf einen maximal zulässigen Betrag begrenzt. Da kohlenstofffaserverstärkte Kunststoffe ein sehr geringes Gewicht bei gleichzeitig hoher Zugbelastung und Steifigkeit aufweisen, führen sie nur zu einer geringen und tolerierbaren Zusatzlast. Insbesondere_Versteifüngsschichten aus kohlenstofffaserverstärkten Kunststoffen können daher auch nachträglich auf die Turmwand bereits bestehender Windkraftanlagen aufgebracht werden, ohne die zulässigen Toleranzbereiche für Zusatzlast und Biegeeigenfrequenz zu überschreiten.

Aufgrund der geringen Masse der kohlenstofffaserverstärkten Kunststoffen kann der gesamte Turm oder ein relativ großer Teil davon mit der Versteifungsschicht versehen werden.

Zur weiteren Verringerung der durch die Versteifungsschicht verursachten Zusatzlast kann diese auch nur im oberen Teil des Turmes aufgebracht werden. Die damit erzielte Verminderung der Schallabstrahlung ist auch bei dieser Ausführungsform sehr gut, da die Schallabstrahlung im wesentlichen durch den oberen Teil der Turmwand erfolgt. Die Versteifungsschicht kann dann auch entsprechend dicker ausgebildet werden, ohne die maximal erlaubte Zusatzlast zu überschreiten.

In einer weiteren Ausführungsform wird lediglich die Innenseite der Turmwand mit der Versteifungsschicht versehen, um die faserverstärkten Kunststoffe und insbesondere die kohlenstofffaserverstärkten Kunststoffe vor Witterungseinflüssen zu schützen. Selbstverständlich können auch nur die Außenseite oder beide Seiten beschichtet werden.

In einer weiteren Ausführungsform besteht die Versteifungsschicht aus einzelnen, voneinander beabstandeten Versteifungsringen. Die Versteifungsringe sind insbesondere radial um die Turmachse verlaufend ausgebildet, wobei es sich insbesondere um geschlossen umlaufende Versteifungsringe handelt.

Die Versteifungsringen können äquidistant zueinander angeordnet sein. Der mittige Abstand der Versteifungsringe soll dabei so gewählt werden, daß er etwa λ/2 der zu dämpfenden Schwingungen beträgt. In einer Ausführungsform nehmen die Abstände zwischen unmittelbar benachbarten Versteifungsringen zumindest zwei unterschiedliche Werte ein, d.h. das beispielsweise der Abstand zwischen zwei Versteifungsringen einem ersten Wert und der Abstand zwischen zwei weiteren Versteifungsringen einem zweiten Wert entspricht. Dadurch lassen sich mehrere Schwingungsfrequenzen dämpfen. Günstig ist es weiterhin, die Versteifungsringe gruppenweise mit jeweils unterschiedlichem Abstand zwischen unmittelbar benachbarten Versteifungsringen anzuordnen.

Die Aufgabe wird ebenfalls gelöst durch eine Windkraftanlage gemäß Anspruch 18.

Dabei umfaßt die Windkraftanlage insbesondere einen Turm, der eine Turmwand mit Innen- und Außenseite aufweist, und einzelne voneinander beabstandete Versteifungsringen, die auf der Innenseite und/oder Außenseite aufgebracht sind. Die Versteifungsringe sind insbesondere radial um die Turmachse verlaufend ausgebildet, wobei es sich insbesondere um umlaufende Versteifungsringe handelt. Die Abstände zwischen unmittelbar benachbarten Versteifungsringen können zumindest zwei unterschiedliche Werte, wie beispielsweise bereits weiter oben dargelegt, einnehmen. Weitere Ausgestaltungen sind in den Ansprüchen 20 bis 26 enthalten.

Die Erfindung betrifft auch ein Verfahren zur Herstellung einer Windkraftanlage mit verminderter Schallabstrahlung, wobei die Windkraftanlage einen Turm mit einer Turmwand aufweist, die eine Innen- und Außenseite hat, mit dem Schritt:
- eine Versteifungsschicht wird auf die Innenseite und/oder Außenseite der Turmwand aufgebracht, wobei die Versteifungsschicht aus zumindest einer Schicht eines faserverstärkten Kunststoffs besteht.

Dadurch kann die Schallabstrahlung von Neuanlagen oder bereits bestehende Anlagen in einfacher Weise erheblich vermindert werden. Zur weiteren Verbesserung der Dämpfung kann zunächst eine Dämpfungsschicht auf die Turmwand und nachfolgend die Versteifungsschicht aufgebracht werden. Die Versteifungsschicht kann zwei oder mehrschichtig aufgebaut sein, wobei dann die einzelnen Schichten nacheinander aufgebracht werden. Günstig ist weiterhin, die Versteifungsschicht ringförmig auszubilden und die erste und zweite Schicht streifenförmig aufzubringen.

Die Versteifungsschicht kann lediglich auf die Innenseite der Turmwand aufgebracht werden.

Die Versteifungsschicht kann aus vorgefertigten Segmenten bestehen, die dann an der Turmwand befestigt werden, oder erst vor Ort, z.B. durch Beschichten der Turmwand mit dem faserverstärkten Kunststoff, hergestellt werden.

Bei den faserverstärkten Kunststoffen kann es sich um kohlenstoff-, glas- und/oder aramidfaserverstärkte Kunststoffe handeln, wobei insbesondere kohlenstofffaserverstärkte Kunststoffe zum Einsatz gelangen.

Im folgenden wird die Erfindung anhand eines Ausführungsbeispiels gezeigt und in Figuren verdeutlicht. Dabei zeigen:
- Figur 1: den kohlenstofffaserverstärkten Kunststoff in streifenförmiger Anordnung zur Bildung von Versteifungsringen;
- Figur 2: einen Querschnitt durch einen 2-schichtigen Versteifungsring;
- Figur 3: einen Querschnitt durch einen 3-schichtigen Versteifungsring;
- Figur 4: einen Querschnitt durch einen 1 -schichtigen Versteifungsring; und
- Figur 5: eine Windkraftanlage mit segmentiertem Turm.

Zur Verminderung der Schallabstrahlung eine Windkraftanlage wird eine Versteifungsschicht entweder direkt auf die Turmwand oder unter Zwischenlage einer Dämpfungsschicht aufgebracht. In beiden Varianten ist die Versteifungsschicht flächig mit der Turmwand verbunden, beispielsweise verklebt. Durch die Verwendung der Dämpfungsschicht wird eine sogenannte 'constrained layer' gebildet, die sich als besonders effektiv für die Schwingungsminimierung und damit für die Begrenzung der Schallabstrahlung herausgestellt hat. Unter 'constrained layer' wird der Schichtverbund (sandwich) aus Turmwand, Versteifungsschicht und zwischengelagerter Dämpfungsschicht verstanden. Die Dämpfungsschicht ist dabei zwischen der zu dämpfenden Turmwand und der Versteifungsschicht, die hier als 'constraining layer' wirkt, mechanisch eingezwängt. Auftretende Schwingungen der Turmwand führen aufgrund der unterschiedlichen mechanischen Eigenschaften von Turmwand und Versteifungsschicht zu Scherspannungen in der Dämpfungsschicht, durch die ein großer Teil der Schwingungsenergie verbraucht wird. Ein weiterer Teil geht durch die Deformation der Versteifungsschicht verloren.

Die Versteifungsschicht muß nicht notwendigerweise großflächig ausgebildet sein, sondern kann aus einzelnen Segmenten bestehen, um die Dämpfungseigenschaften besser einstellen zu können. Beispielsweise kann die Versteifungsschicht aus einzelnen Versteifungsringen gebildet werden, die konzentrisch um die Turmachse verlaufen können. Die Breite der Versteifungsringe, die Dicke der Kunststoffschicht, das verwendete Kunststoffmaterial sowie die Dicke und das Material der optional verwendeten Dämpfungsschicht sollen so gewählt sein, daß insbesondere im relevanten Frequenzbereich eine optimale Dämpfung erreicht wird.

Um die Versteifungsschicht bzw. die Versteifungsringe entsprechend stabil auszubilden, können sie aus zumindest zwei Schichten des kohlenstofffaserverstärkten Kunststoffs bestehen, zwischen denen sich ein Abstandselement befinden kann. Dadurch wird die Steifigkeit der Versteifungsschicht bzw. der Versteifungsringe erhöht, so daß sie eine effektiv wirkende 'constraining layer' darstellen. Die Versteifungsringe bzw. die Versteifungsschicht durch zusätzliche Kunststoffschichten oder -lagen weiter verstärkt werden.

Konkrete Beispiele zeigen die nachfolgend beschriebenen Figuren.

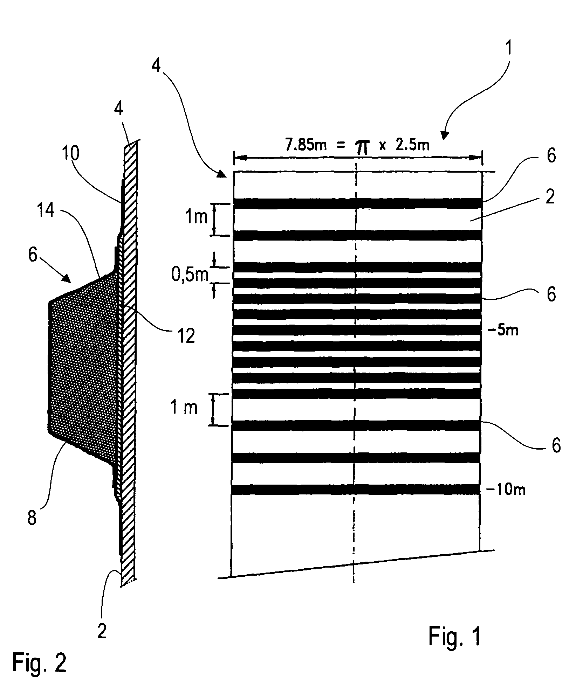

Figur 1 zeigt die Innenseite 2 der Turmwand 4 mit einer Vielzahl von Versteifungsringen 6, die hier die Versteifungsschicht bilden. Dargestellt ist lediglich der obere Teil des Turms 1, auf dem das Maschinenhaus befestigt ist. Der Turm selbst erstreckt sich noch weiter nach unten bis zu einem hier nicht gezeigten Fundament. Auf der Innenseite 2 sind horizontal verlaufende Versteifungsringe 6 aus kohlenstofffaserverstärktem Kunststoff angeordnet. Wie in Figur 1 erkennbar, sind die Versteifungsringe 6 in unterschiedlichem Abstand zueinander angeordnet. Dabei sind die mittleren Versteifungsringe etwa 0 bis 1 m, insbesondere mittig etwa 0.5 m voneinander entfernt im Gegensatz zu den jeweils äußeren Versteifungsringen, deren mittiger Abstand zwischen 0,5 und 6 m liegt und insbesondere etwa 1 m ist. Insgesamt weisen insbesondere die oberen 10 m der Innenseite 2 die Versteifungsringe 6 auf. In vielen Anwendungsfällen genügt es, den oberen Abschnitt des Turms mit einer Versteifungsschicht bzw. Versteifungsringen zu versehen, da insbesondere dieser Abschnitt zur Schallabstrahlung beiträgt. Die Länge der einzelnen Versteifungsringe hängt vom Durchmesser des Turmes ab und beträgt etwa 7.85 m bei einem Innendurchmesser von 2.5 m. Sofern der Turm aus einzelnen Segmenten aufgebaut ist, können die Versteifungsringe auch mittig in den Segmenten angeordnet sein.

Figur 2 vermittelt einen detaillierteren Eindruck vom Aufbau eines 2-schichtig aufgebauten Versteifungsrings 6. Dieser besteht aus 2 Schichten (erste oder innere Kunststoffschicht 10 und zweite oder äußere Kunststoffschicht 14) des kohlenstofffaserstoffverstärkten Kunststoffs, zwischen denen ein Abstandselement 8 angeordnet ist. Bei diesem kann es sich um einen Vollkörper aus Polystyrol oder einen Hohlkörper aus einem anderen Material handeln. Zusätzlich ist zwischen der Versteifungsschicht 6, d.h. zwischen innere Kunststoffschicht 10 und der Innenwand 2 des Turmes, ein Dämpfungsmaterial 12 angeordnet. Die Kunststoffschichten werden typischerweise erst nach Herstellung des Turms auf die Innenwand laminiert und können, wie in Figur 2 gezeigt, seitlich neben dem Abstandselement direkt miteinander verbunden sein. Dadurch wird das Abstandselement vollständig von den beiden Kunststoffschichten 10 und 14 umschlossen und bildet mit diesen einen festen Versteifungsring. Typischerweise werden die Kunststofflagen in etwa 100 bis 500 mm, insbesondere in etwa 300 mm breiten und etwa 0,1 bis 5 mm, insbesondere etwa 0.5 mm dicken Schichten aufgetragen.

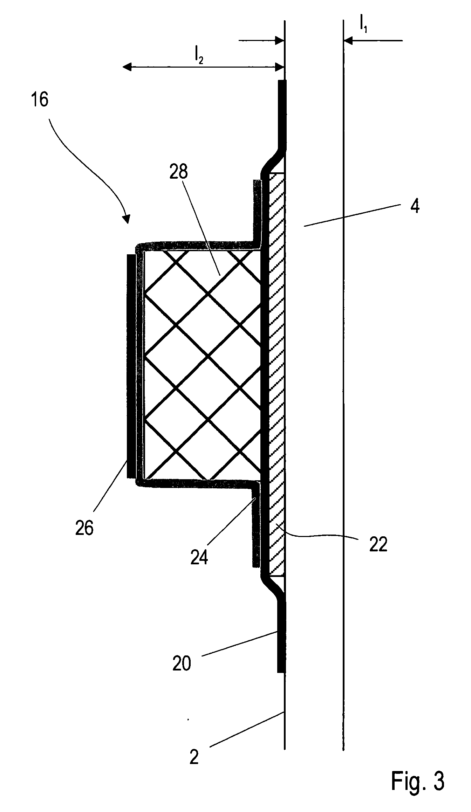

Einen Aufbau eines Versteifungsrings 16 mit drei Kunststoffschichten zeigt Figur 3. Der Versteifungsring 16 besteht hier aus einer inneren (erste) Kunststoffschicht 20, einer äußeren (zweite) Kunststoffschicht 24, einem Abstandselement 28 und einer weiteren (dritte) Kunststoffschicht 26. Zuerst wird eine Dämpfungsschicht 22 auf die Innenseite 2 der Turmwand 4 aufgebracht, beispielsweise geklebt. Die Dämpfungsschicht besteht beispielsweise aus einem Elastomer, z.B. Gummi oder Smactane, und weist eine Dicke zwischen 10 und 200 mm, typischerweise etwa 50 mm auf. Danach wird die innere Kunststoffschicht 20, die hier etwa 300 mm breit und etwa 0,5 mm dick ist, auf die Dämpfungsschicht 22 laminiert. Da die innere Kunststoffschicht 20 breiter als die Dämpfungsschicht 22 ist, wird letztere vollständig von der inneren Kunststoffschicht 20 bedeckt.

Danach erfolgt das Aufbringen des Abstandselements 28 auf die innere Kunststoffschicht 20. Typischerweise wird das Abstandselement 28, bei dem es sich beispielsweise um einen Polystyrolvollkörper oder um einen Hohlkörper handelt, aufgeklebt. Alternativ kann das Abstandselement 28 auch durch die nachfolgend aufzubringende äußere Kunststoffschicht 24, die ebenfalls etwa 300 mm breit und 0.5 mm dick ist, fixiert werden. Abschließend wird die weitere Kunststoffschicht 26 (etwa 0.5 mm dick) zur weiteren Versteifung aufgebracht. Als Kunststoffmaterial wird CFC verwendet (z.B gewebte Carbonfasern, eingebettet in Epoxydharz oder Phenolharz). Die angegebene Breite und Dicke der Kunststoffschichten können innerhalb der weiter oben genannten Bereiche variieren. Eine sehr gute Schalldämpfung wurde erreicht, wenn die Gesamtdicke I₂ der Versteifungsschicht etwa doppelt so dick wie die Dicke I₁ der Turmwand ist.

Zum Aufbringen der faserverstärkten Kunststoffe bieten sich insbesondere zwei Verfahren ein. Zum einen können abwechselnd Harzschichten und das in den Harz einzubettende Fasergewebe aufgebracht werden. Andererseits ist es möglich, bereits mit dem Harz getränktes Fasergewebe bei erhöhter Temperatur aufzubringen.

Die dargestellten Versteifungsschichten und Versteifungsringen haben sich insbesondere in Verbindung mit einer Dämpfungsschicht als wirksame und wirtschaftlich vertretbare Maßnahme zur Verminderung der Schallabstrahlung von Windkraftanlagen erwiesen. Bereits bestehende Windkraftanlagen können mit dem erfindungsgemäßen Verfahren auch nachträglich mit relativ geringem Aufwand schallisoliert werden, ohne daß dadurch eine Gefährdung der Turmstabilität zu befürchten ist.

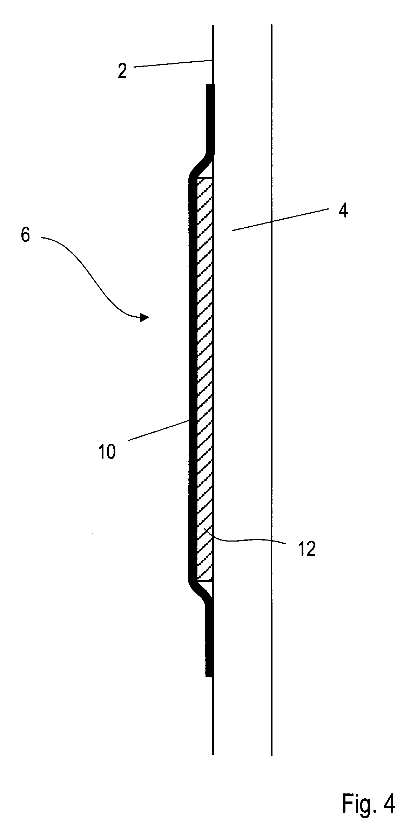

Ein Versteifungsring, der lediglich eine Kunststoffschicht aufweist, ist in Figur 4 dargestellt. Zwischen der Kunststoffschicht 6 und der Innenseite 2 der Turmwand 4 befindet sich die Dämpfungsschicht 12. Auch bei dieser Ausführungsform können die bereits weiter oben angegebenen Materialien mit den dort genannten Abmessungen verwendet werden.

Die angegebenen Größen und Ausführungen stellen lediglich Beispiele zum besseren Verständnis dar. Der Aufbau der Versteifungsringe, ihre mechanischen Eigenschaften sowie ihre Größe, Abstand und Art der Befestigung können für unterschiedliche Windkraftanlagen unterschiedlich ausfallen und müssen den tatsächlichen Gegebenheiten entsprechend angepaßt werden.

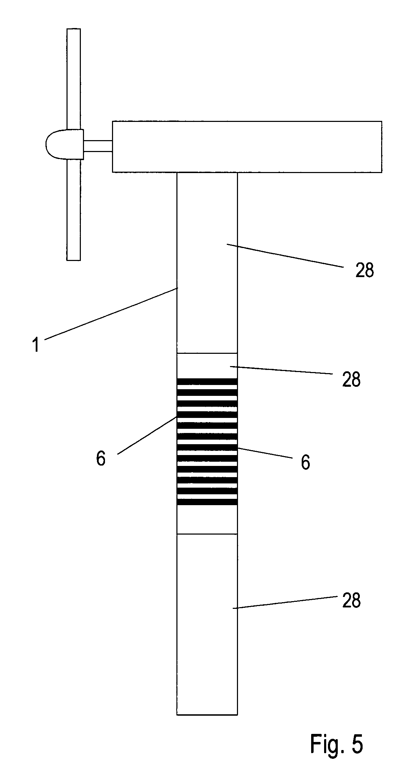

Figur 5 zeigt eine Windkraftanlage, deren Turm aus einzelnen Segmenten 28 aufgebaut ist. Die Versteifungsringe 6 sind hier mittig im mittleren Segment angeordnet, können jedoch auch in den übrigen Segmenten vorhanden sein.

## Patentansprüche

1. Windkraftanlage
- mit einem Turm (1), der eine Turmwand (4) mit Innen- und Außenseite aufweist, und
- einer Versteifungsschicht (6, 16), die auf der Innenseite (2) und/oder Außenseite aufgebracht ist und aus zumindest einer Schicht (10, 14, 20, 24) eines faserverstärkten Kunststoffs besteht.

2. Windkraftanlage nach Anspruch 1,
**dadurch gekennzeichnet, daß**
es sich bei dem faserverstärkten Kunststoff um einen kohlenstofffaserverstärkten Kunststoff handelt.

3. Windkraftanlage nach Anspruch 1 oder 2,
**dadurch gekennzeichnet, daß**
die Versteifungsschicht (6, 16) lediglich im oberen Teil des Turms (1) aufgebracht ist.

4. Windkraftanlage nach einem der Ansprüche 1 bis 3,
**dadurch gekennzeichnet, daß**
die Versteifungsschicht (6, 16) lediglich auf der Innenseite (2) der Turmwand aufgebracht ist.

5. Windkraftanlage nach einem der Ansprüche 1 bis 4,
**dadurch gekennzeichnet, daß**
die Versteifungsschicht (6, 16) aus einzelnen, voneinander beabstandeten Versteifungsringen (6, 16) besteht.

6. Windkraftanlage nach Anspruch 5,
**dadurch gekennzeichnet, daß**
die Abstände zwischen unmittelbar benachbarten Versteifungsringen (6, 16) zumindest zwei unterschiedliche Werte einnehmen.

7. Windkraftanlage nach einem der Ansprüche 1 bis 6,
**dadurch gekennzeichnet, daß**
zwischen der Versteifungsschicht (6, 16) und der Turmwand (1) eine Dämpfungsschicht (12, 22) angeordnet ist.

8. Windkraftanlage nach einem der Ansprüche 1 bis 7,
**dadurch gekennzeichnet, daß**
die Versteifungsschicht (6, 16) aus zumindest zwei Schichten (10, 14, 20, 24) des faserverstärkten Kunststoffs und einem Abstandselement (8, 28) besteht, das zwischen den zwei Schichten (10, 14, 20, 24) angeordnet ist.

9. Windkraftanlage nach einem der Ansprüche 1 bis 8,
**dadurch gekennzeichnet, daß**
der Turm (1) aus zumindest zwei zylinderförmigen Segmenten (28) aufgebaut ist, wobei die Versteifungsschicht (6, 16) in wenigstens einem der zylinderförmigen Segmente (28) angeordnet ist.

10. Verfahren zur Herstellung einer Windkraftanlage mit verminderter Schallabstrahlung, wobei die Windkraftanlage einen Turm (1) mit einer Turmwand (4) aufweist, die eine Innen- und Außenseite hat, mit dem Schritt:
- eine Versteifungsschicht (6, 16) wird auf die Innenseite (2) und/oder Außenseite der Turmwand (4) aufgebracht, wobei die Versteifungsschicht aus zumindest einer Schicht (10, 14, 20, 24) eines faserverstärkten Kunststoffs besteht.

11. Verfahren nach Anspruch 10,
**dadurch gekennzeichnet, daß**
es sich bei dem faserverstärkten Kunststoff um einen kohlenstofffaserverstärkten Kunststoff handelt.

12. Verfahren nach Anspruch 10 oder 11,
**dadurch gekennzeichnet, daß**
zunächst eine Dämpfungsschicht (12, 22) auf die Turmwand (4) und nachfolgend die Versteifungsschicht (6, 16) aufgebracht wird.

13. Verfahren nach einem der Ansprüche 10 bis 12,
**dadurch gekennzeichnet, daß**
die Versteifungsschicht (6, 16) aus zumindest zwei Schichten (10, 14, 20, 24) des faserverstärkten Kunststoffs und einem Abstandselement (8, 28) besteht, das zwischen den zwei Schichten (10, 14, 20, 24) angeordnet ist, und
- zunächst die erste Schicht (10, 20) auf die Turmwand und/oder Dämpfungsschicht (12, 22) aufgebracht wird,
- in einem weiteren Schritt das Abstandselement auf die erste Schicht (10, 20) aufgebracht wird, und
- in einem nachfolgenden Schritt die zweite Schicht (14, 24) aufgebracht wird.

14. Verfahren nach einem der Ansprüche 10 bis 13,
**dadurch gekennzeichnet, daß**
die Versteifungsschicht (6, 16) in Form von einzelnen, voneinander beabstandeten Versteifungsringen (6, 16) ausgebildet wird.

15. Verfahren nach einem der Ansprüche 10 bis 14,
**dadurch gekennzeichnet, daß**
die erste und zweite Schicht (10, 14, 20, 24) streifenförmig aufgebracht werden.

16. Verfahren nach einem der Ansprüche 10 bis 15,
**dadurch gekennzeichnet, daß**
die Versteifungsschicht (6, 16) lediglich auf die Innenseite (2) der Turmwand (4) aufgebracht wird.

17. Verfahren nach einem der Ansprüche 10 bis 16,
**dadurch gekennzeichnet, daß**
eine bereits bestehende Windkraftanlage mit der Versteifungsschicht (6, 16) versehen wird.

18. Windkraftanlage
- mit einem Turm (1), der eine Turmwand (4) mit Innen- und Außenseite aufweist, und
- mit einzelnen voneinander beabstandeten Versteifungsringen (6, 16), die auf der Innenseite (2) und/oder Außenseite aufgebracht sind.

19. Windkraftanlage nach Anspruch 18,
**dadurch gekennzeichnet, daß**
die Abstände zwischen unmittelbar benachbarten Versteifungsringen (6, 16) zumindest zwei unterschiedliche Werte einnehmen.

20. Windkraftanlage nach Anspruch 18 oder 19,
**dadurch gekennzeichnet, daß**
die Versteifungsringe (6, 16) aus zumindest einer Schicht (10, 14, 20, 24) eines faserverstärkten Kunststoffs bestehen.

21. Windkraftanlage nach Anspruch 20,
**dadurch gekennzeichnet, daß**
es sich bei dem faserverstärkten Kunststoff um einen kohlenstofffaserverstärkten Kunststoff handelt.

22. Windkraftanlage nach einem der Ansprüche 18 bis 21,
**dadurch gekennzeichnet, daß**
die Versteifungsringe (6, 16) lediglich im oberen Teil des Turms (1) aufgebracht sind.

23. Windkraftanlage nach einem der Ansprüche 18 bis 22,
**dadurch gekennzeichnet, daß**
die Versteifungsringe (6, 16) lediglich auf der Innenseite (2) der Turmwand aufgebracht sind.

24. Windkraftanlage nach einem der Ansprüche 18 bis 23,
**dadurch gekennzeichnet, daß**
zwischen den Versteifungsringen (6, 16) und der Turmwand (1) eine Dämpfungsschicht (12, 22) angeordnet ist.

25. Windkraftanlage nach einem der Ansprüche 18 bis 24,
**dadurch gekennzeichnet, daß**
die Versteifungsringe (6, 16) jeweils aus zumindest zwei Schichten (10, 14, 20, 24) des faserverstärkten Kunststoffs und einem Abstandselement (8, 28) bestehen, das zwischen den zwei Schichten (10, 14, 20, 24) angeordnet ist.

26. Windkraftanlage nach einem der Ansprüche 18 bis 25,
**dadurch gekennzeichnet, daß**
der Turm (1) aus zumindest zwei zylinderförmigen Segmenten (28) aufgebaut ist, wobei die Versteifungsringe (6, 16) in wenigstens einem der zylinderförmigen Segmente (28) angeordnet sind.
